# EUROPEAN PATENT SPECIFICATION

(11) **EP 3 379 067 B1**
(45) Date of publication and mention of the grant of the patent: **19.11.2025**
(21) Application number: 18162990.8
(22) Date of filing: 20.03.2018
(51) Int. Cl.: F02G 5/02, F01N 5/02

(54) **ENGINE SYSTEM**
MOTORSYSTEM
SYSTÈME DE MOTEUR

(30) Priority: 20.03.2017 IT 201700030578
(43) Date of publication of application: 26.09.2018
(73) Proprietor: FPT Motorenforschung AG, 9320 Arbon (CH)
(72) Inventor: JAEGER, Laurentius Walter, 8048 ZURICH (CH)
(74) Representative: Studio Torta S.p.A.

(56) References cited:
- EP-A1- 2 762 715
- EP-A2- 1 674 681
- WO-A1-02/053890

## Description

### Technical field of the invention

The invention relates to the field of internal combustion engines and it can be applied both to the field of vehicle powering and boat powering and to the field of fixed installations for the production of electrical energy. In particular, the invention relates to the field of combined cycles.

### State of the art

Combined cycles were born from the idea of recovering the heat contained in the gases produced by a primary engine, for example by a gas turbine, in order to turn it, through a proper thermodynamic cycle, into further electrical or mechanical power.

In the field of Diesel cycle internal combustion engines, especially for vehicle powering, exhaust gas treatment plays a particularly important role, as the laws currently enforced require a significant reduction of pollutants, among which there are CO, NOx, HC and particulate.

WO02053890A1 corresponds to the preamble of claim 1 and discloses a Diesel engine combined with a post-combustor and a turbine, arranged downstream of the post-combustor.

Diesel cycle engines usually implement an after-treatment system (ATS), which comprises different pollutant reduction devices, such as the DOC for the reduction of CO and HC, the DPF for the reduction of particulate and the SCR for the reduction of NOx. These acronyms are well known to a person skilled in the art. Some or all of these devices, which are arranged in series with one another, define an ATS. The SCR, in particular, is implemented in combination with a dosing device for a urea-based reactant (AdBlue), which is injected into the exhaust gas flow upstream of the SCR so as to reduce the NOx contained therein.

On the one hand, the excess urea is converted into ammonia, which counts as a pollutant emitted by the engine. On the other hand, the same urea, in conditions of low temperature, crystallizes, thus clogging the dosing device and possibly also the SCR; therefore, many efforts were made to improve the performances of ATS. However, results have not always been satisfactory.

An object of the invention is that to solve the problems deriving from the use of an ATS in a Diesel cycle engine, as already mentioned above.

Another object of the invention is to keep the efficiency of the Diesel cycle engine intact when the engine is properly integrated in a combined cycle; said combined cycle permits the elimination of the classical ATS for Diesel cycle engines, replacing it with a so-called 3-way catalyst, which is usually used in petrol engines.

Petrol engines, unlike Diesel engines, have a stoichiometric ratio between fuel and air, i.e. the so-called lambda factor is equal to 1.

Diesel cycle engines, instead, work with a lambda factor exceeding 1, which means that they operate with excess oxygen. On the other hand, though, 3-way catalysts are not capable of causing proper reactions in the presence of excess oxygen, namely with a lambda factor exceeding 1.

### Summary of the invention

The aforementioned aims are reached by an engine system is provided as defined in the appended set of claims forming an integral part of the description.. Thanks to the claimed engine system, at least immediately upstream of the ATS the fuel flow rate has a lambda value equal to 1.0.

In detail, the supercharging pressure of the engine is controlled in proportion to the increase in backpressure caused by the introduction of the recovery cycle in the exhaust circuit of the engine.

According to an embodiment of the invention, second injection means and a combustion chamber are added, which are arranged downstream of the internal combustion engine. Here, fuel is introduced and burnt so as to consume all the oxygen still present in the exhaust gases, so as to exactly reach a lambda value equal to 1. This causes a temperature increase in the exhaust gases of the engine.

In order to exploit this addition of enthalpy to the cycle, the recovery cycle is introduced downstream of said combustion chamber. The heat exchanger of this recovery cycle causes a pressure increase in the exhaust gases upstream of said heat exchanger and, therefore, also in the exhaust manifold of the internal combustion engine.

The presence of possible turbines in the exhaust line, upstream of the combustion chamber or downstream of the heat exchanger, further worsens the situation. According to a preferred variant of the invention, the PMEP of the internal combustion engine is brought to ideal values by controlling the supercharging pressure in a manner that is coordinated with and proportional to the enthalpy increase produced by the injection of fuel in the combustor arranged in the exhaust line. In particular, the operation of the first compressor C1 is coordinated with the quantity of fuel injected in the exhaust line, in particular the compressor increases the degree of supercharging proportionally to an increase in the fuel injected in the exhaust line. Evidently, in case there are different supercharging stages, this adjustment can be made in one or more of them.

Preferably, a lambda sensor (UEGO) is installed upstream of the combustion means N and/or immediately upstream of the ATS, so as to perform a feedback control of the fuel dosage.

Therefore, the combustion device, which is operatively connected to the exhaust manifold of the Diesel cycle engine, completes the combustion thereof permitting the implementation of a 3-way catalyst, which requires a lambda factor equal to 1.0.

A 3-way catalyst not only is cheaper than an ATS for Diesel engine, but it is also more reliable over time, reducing maintenance times and costs.

### Brief description of the figures

Further objects and advantages of the invention will be best understood upon perusal of the following detailed description of an embodiment thereof (and of relative variants) with reference to the accompanying drawings merely showing non-limiting examples, wherein:
- Figure 1 shows a basic example of the invention;
- Figure 2 shows a preferred variant of the basic example of figure 1;
- Figure 3 shows a further preferred variant of the invention, whereas figures 4 and 5 show combination of the variants of figures 2 and 3.

The components represented with broken lines are optionals, whereas the broken connection lines are electric and/or data bus lines.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

### Detailed description of embodiments

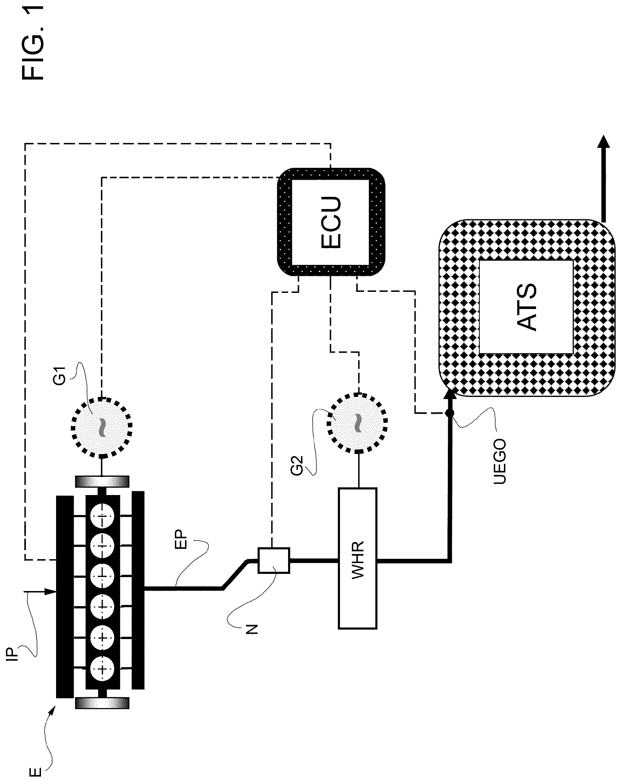

Figure 1 shows the basic concept of the engine system for vehicles or fixed installations according to the invention.

It comprises a Diesel cycle internal combustion engine E comprising an intake line IP and an exhaust line EP and first fuel injection means (not indicated).

On said exhaust line EP there are optionally arranged second injection means for introducing and burning fuel in the exhaust line, so as to obtain a second combustion operatively downstream of the one performed in the Diesel engine, hence exploiting the residual oxygen of the exhaust gases of the first combustion.

Alternatively to the second injection means, the first injection means are configured to inject fuel into the cylinders during the so-called washing cycle, namely during the cycle in which the piston moves from the bottom dead centre to the top dead centre with the exhaust valve open to expel the exhaust gas produced by the first combustion. This fuel injection technique is usually known as "post-injection" and is widely used for the regeneration of particulate filters.

This implies that, even though it is possible, no fresh air is introduced between the Diesel engine and the combustion chamber arranged on the exhaust line.

Hereinafter we will talk about "combustion means N", reminding that they comprise at least one combustion chamber arranged on the exhaust line of the internal combustion engine and, optionally, any known device, such as a carburetor or injector, designed to introduce fuel, preferably Diesel fuel, into said combustion chamber, in order to obtain said second combustion.

According to the invention, the engine system comprises means to perform a waste heat recovery (WHR) cycle comprising a first heat exchanger associated with said exhaust line so as to extract heat from said exhaust gases. The first heat exchanger needed to extract heat from the exhaust gases is arranged downstream of said combustion means N.

In order to make the drawings simpler, in the aforesaid figures the entire WHR cycle is represented with one block, but it comprises said first heat exchanger defining a hot source, a second heat exchanger (not shown) defining a cold source, which receives heat in order to allow the carrier means to condense, and at least one "steam" turbine or another type of expansion chamber. These are known concepts. For the mere sake of simplicity, the block representing the heat exchanger of the WHR identifies the entire WHR.

Preferably, the carrier means of the recovery cycle is water with suitable additives or an organic fluid compound.

According to the example of figure 1, the last element operatively connected to the exhaust line is a pollutant reduction device ATS (After Treatment System). It is designed to treat the exhaust gases produced both by the internal combustion engine E and by the combustion means N. The ATS is arranged downstream of the combustion means N, whereas the WHR circuit can be both interposed between the combustion means N and the ATS and arranged downstream of the ATS.

According to the invention, a processing unit ECU, which preferably coincides with the control unit of the internal combustion engine E, is configured to control an injection/introduction of fuel by means of post-injections or through said second injection means, so as to maintain a lambda value equal to 1.0 in the exhaust gases entering said pollutant reduction device ATS.

Evidently, at least one lambda or UEGO sensor is associated with the exhaust line. Preferably, said at least one sensor is associated with the exhaust line immediately upstream of the ATS, regardless of whether the latter is arranged upstream or downstream of the WHR.

Further sensors can be arranged downstream of the ATS.

For a better control of the injection of fuel in the exhaust line, it is possible to install a further lambda or UEGO sensor upstream of the second injection means. The arrangement of the sensors can be understood by a person skilled in the art and, hence, does not require further explanations.

Therefore, it is evident that there are first fuel injection means, which control the first combustion in the Diesel engine, and second fuel injection means which control the second combustion in the combustion chamber along the exhaust line, and it is evident that said injection means operate in two separate and distinct phases of the combined cycle. The combustions are separate from one another both in time and in space.

Depending on the implementation of the engine system, both the Diesel engine E and the turbine of the WHR can be combined in "compound" so as to drive one single electric generator G1 or a vehicle transmission. Alternatively, they can drive independent electric generators G1 and G2 or the Diesel engine E drives a vehicle transmission and the WHR drives an electric generator or vice versa.

A further alternative, in a vehicle implementation, is given when both the Diesel engine E and the WHR cause the rotation of a first G1 and a second electric generator G2, respectively, which supply an electric drive motor, thus creating a series hybrid configuration. This implementation, for example, turns out to be very advantageous in marine applications.

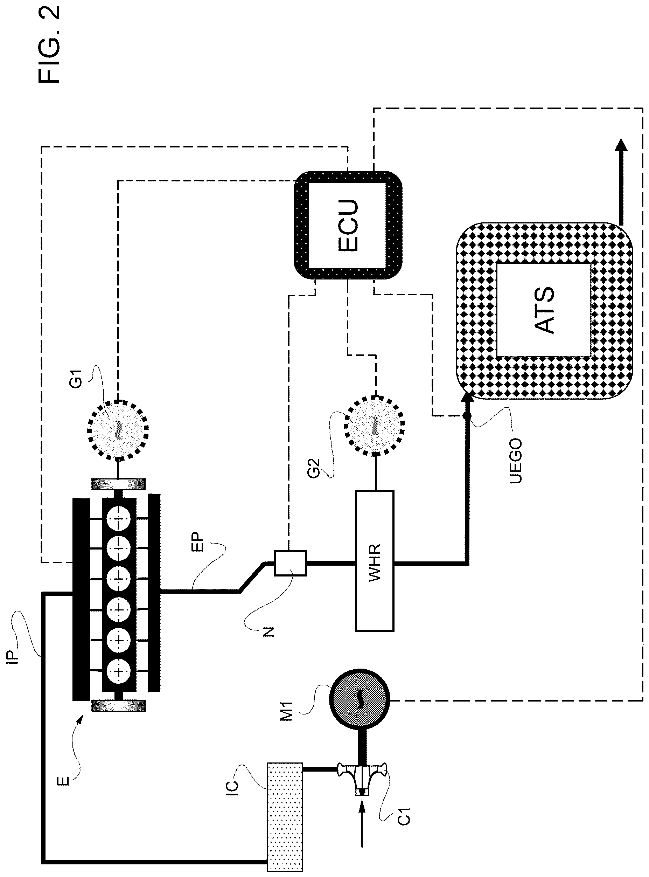

Figure 2 shows, in addition to figure 1, a compressor C1, which can carry out one or more compression stages to compress the fresh air sucked in from the outside.

According to the variant of figure 2, the compressor C1 is caused to rotate by an electric motor M1.

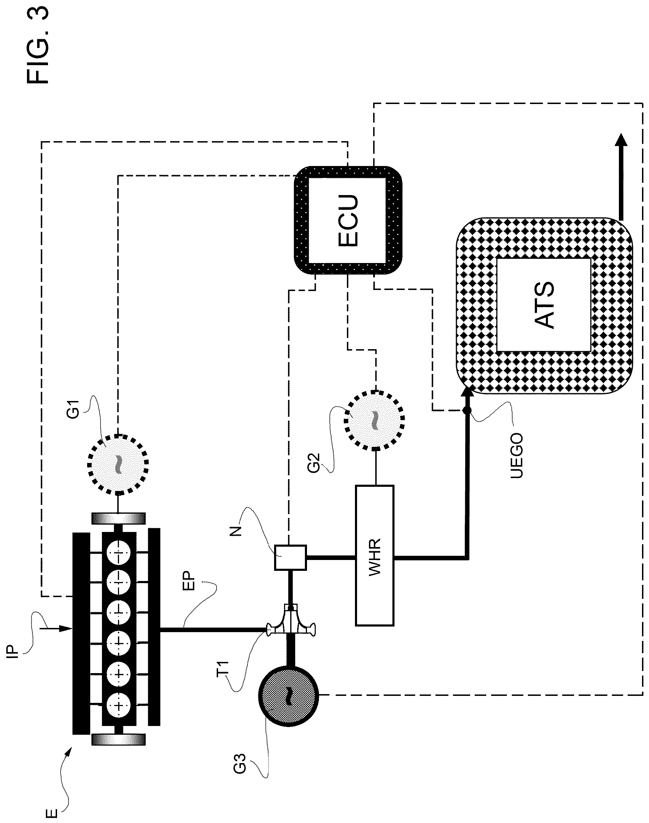

According to figure 3, the exhaust line EP comprises a turbine T1, which is interposed between the exhaust manifold of the Diesel engine E and the combustion means N.

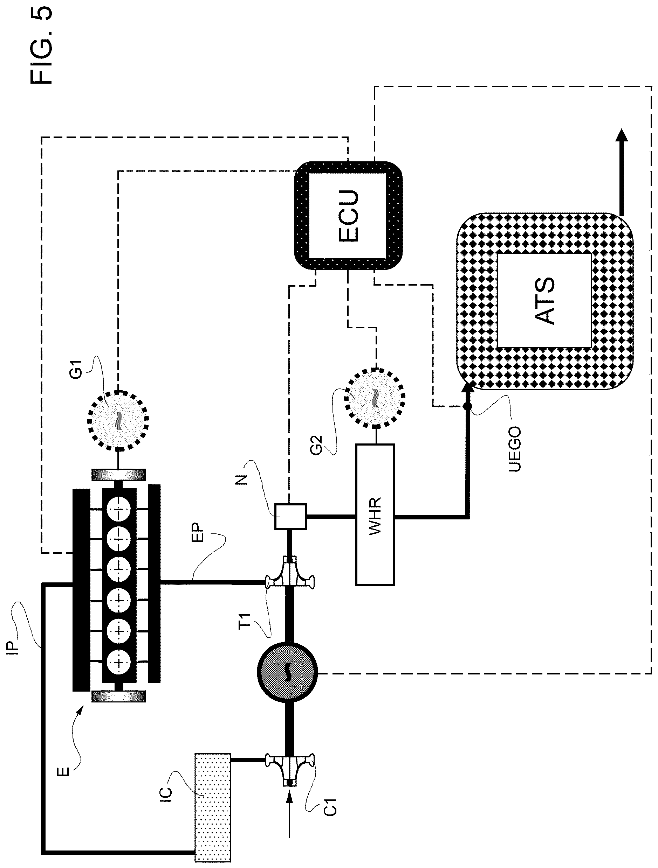

The shaft of the turbine T1 is connected to a load, which can be represented by a third electric generator G3, see figure 3, or, when there is a compressor C1, which defines one or more compression stages and is arranged on the intake line IP, then the load connected to the turbine T1 can be also represented by the compressor C1, see figure 1. Alternatively, both the compressor C1 and a third electric machine G3, as shown in figure 5, are connected to the shaft of the turbine T1.

According to the diagram of figure 1, the combustion means N increase the temperature of the exhaust gases of the Diesel engine, which carries out a first thermodynamic cycle. Then, these exhaust gases are subsequently used in a second thermodynamic cycle. According to the invention, a WHR cycle arranged downstream of the combustion means N is properly used to turn into mechanical power the enthalpy of this flow, without increasing the backpressure thereof beyond the small extend that is needed to couple the first heat exchanger to the exhaust line.

According to the diagram of figure 2, the addition of a compressor in the intake line of the Diesel engine allows the mean effective pressure (BMEP, Brake Mean Effective Pressure) of the Diesel engine to be increased, at the same time making the PMEP, Pumping Mean Effective Pressure highly positive. By so doing, the efficiency of the Diesel engine is strongly increased.

According to the diagram of figure 3, the addition of a turbine in the exhaust line of the Diesel engine further allows the PMEP of the Diesel engine to become negative, so as to make the exhaust gas recirculation easier according to an EGR diagram.

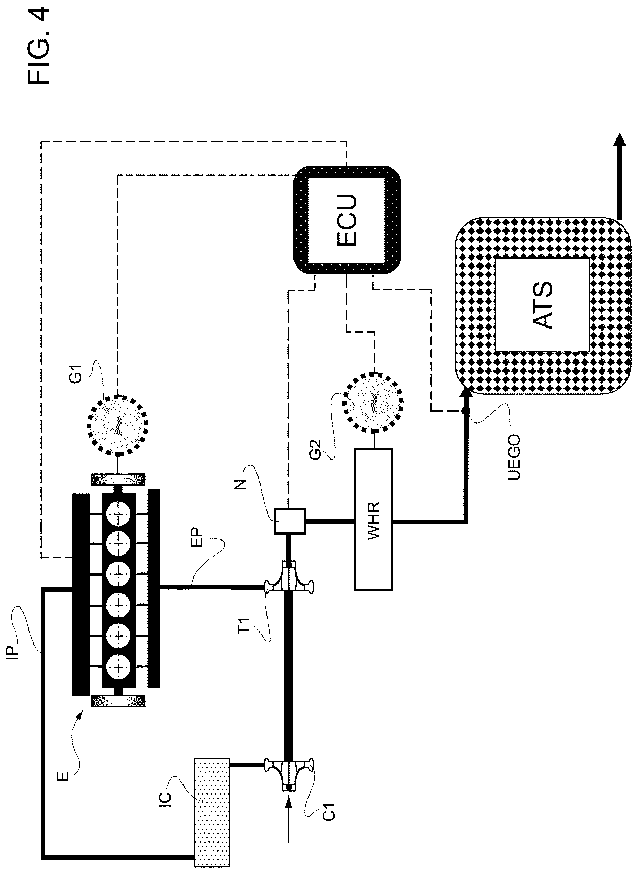

According to the variant of figure 4, a traditional turbocharged Diesel engine, changed according to the invention, is used.

According to the diagram of figure 5, the addition of an electric motor-generator on the shaft controlling the rotation of the turbine and of the compressor allows the PMEP of the Diesel engine to be controlled in order to balance, based on the operation point and in a suitable manner, the opposing requirements of negative and positive PMEP, so as to favour the efficiency of the engine or the ability to carry out an EGR.

According to any one of the variants described above, the diagram can comprise anyway exhaust gas recirculation means (EGR). They can be high-pressure or low-pressure exhaust gas recirculation means.

As far as the ATS is concerned, thanks to the invention, it is of the type requiring the lambda value to be 1.0, exactly like petrol engines. Therefore, even though the internal combustion engine is a Diesel cycle engine, the ATS is of the type used in petrol engines, a so-called 3-way catalyst, which has a very small cost.

The fuel injected along the exhaust line is not necessarily Diesel fuel, it can be any kind of fuel.

The supplying maps of the internal combustion engine must preferably be such as to keep the lambda value as low as possible, so as to maintain the temperature of the exhaust gases within a temperature interval that is compatible with the WHR cycle arranged on the exhaust line.

More in particular, when there are further combustion means arranged downstream of the first exchanger of the WHR and a relative turbine arranged immediately downstream of the further combustion means, said turbine can be caused to operate with λ = 1 because the quantity of oxygen contained in the exhaust gases is zero. On the contrary, gas turbines usually operate with excess oxygen, i.e. with lambda >>1.

Gas turbines usually cannot work with lambda = 1, because they would experience gas temperatures that are too high.

Since, according to the invention, three distinct combustions are performed, the first one in the internal combustion engine, the second one downstream thereof and upstream of the WHR and the third one downstream of the WHR, the temperatures reached by the gases turn out to be remarkably lower than in traditional gas turbine configurations because of the following reasons:
- the exhaust gases involved in the third combustion have a high thermal capacity, which helps limit the temperature increase resulting from the third combustion;
- the exhaust gases expand both in the internal combustion engine and, possibly, even downstream thereof, namely before being involved in the third combustion.

The configuration of figures 3, 4 and 5 is particularly advantageous since the exhaust gases immediately downstream of the internal combustion engine have a significant enthalpy content and, therefore, the latter can advantageously be exploited through the first turbine T1 arranged upstream of the combustion means N.

It should be pointed out that the transmission shafts of the different turbines can be operatively associated, for example through gear transmission organs, so as to operate, together, on a vehicle transmission or on a generator defining a turbo-compound diagram, alternatively to a relative compressor or to a dedicated electric generator.

Any one of the diagrams can also be used so that the turbines share a same shaft.

It is evident that the ECU controls the Diesel cycle engine, the generators/electric motors G1 - G4, monitors the other things, the quantity of oxygen in the exhaust gases downstream of the Diesel engine and/or immediately upstream of the ATS, and controls the introduction of fuel into the combustion means N and/or the further combustion means.

The non-limiting example described above can be subjected to variations, without for this reason going beyond the scope of protection of the inventionas defined by the appended set of claims.

According to the example of figure 1, the last element operatively connected to the exhaust line is a pollutant reduction device ATS (After Treatment System). It is designed to treat the exhaust gases produced both by the internal combustion engine E and by the combustion means N. The ATS is arranged downstream of the combustion means N, whereas the WHR circuit can be both interposed between the combustion means N and the ATS and arranged downstream of the ATS.

According to the invention, a processing unit ECU, which preferably coincides with the control unit of the internal combustion engine E, is configured to control an injection/introduction of fuel by means of post-injections or through said second injection means, so as to maintain a lambda value equal to 1.0 in the exhaust gases entering said pollutant reduction device ATS.

Evidently, at least one lambda or UEGO sensor is associated with the exhaust line. Preferably, said at least one sensor is associated with the exhaust line immediately upstream of the ATS, regardless of whether the latter is arranged upstream or downstream of the WHR.

Further sensors can be arranged downstream of the ATS.

For a better control of the injection of fuel in the exhaust line, it is possible to install a further lambda or UEGO sensor upstream of the second injection means. The arrangement of the sensors can be understood by a person skilled in the art and, hence, does not require further explanations.

Therefore, it is evident that there are first fuel injection means, which control the first combustion in the Diesel engine, and second fuel injection means - coinciding with the first injection means, but configured to also carry out the so-called post-injections, or independent of the aforesaid first injection means - which control the second combustion in the combustion chamber along the exhaust line, and it is evident that said injection means operate in two separate and distinct phases of the combined cycle. The combustions are separate from one another both in time and in space.

Depending on the implementation of the engine system, both the Diesel engine E and the turbine of the WHR can be combined in "compound" so as to drive one single electric generator G1 or a vehicle transmission. Alternatively, they can drive independent electric generators G1 and G2 or the Diesel engine E drives a vehicle transmission and the WHR drives an electric generator or vice versa.

A further alternative, in a vehicle implementation, is given when both the Diesel engine E and the WHR cause the rotation of a first G1 and a second electric generator G2, respectively, which supply an electric drive motor, thus creating a series hybrid configuration. This implementation, for example, turns out to be very advantageous in marine applications.

Figure 2 shows, in addition to figure 1, a compressor C1, which can carry out one or more compression stages to compress the fresh air sucked in from the outside.

According to the variant of figure 2, the compressor C1 is caused to rotate by an electric motor M1.

According to figure 3, the exhaust line EP comprises a turbine T1, which is interposed between the exhaust manifold of the Diesel engine E and the combustion means N. The shaft of the turbine T1 is connected to a load, which can be represented by a third electric generator G3, see figure 3, or, when there is a compressor C1, which defines one or more compression stages and is arranged on the intake line IP, then the load connected to the turbine T1 can be also represented by the compressor C1, see figure 1. Alternatively, both the compressor C1 and a third electric machine G3, as shown in figure 5, are connected to the shaft of the turbine T1.

According to the diagram of figure 1, the combustion means N increase the temperature of the exhaust gases of the Diesel engine, which carries out a first thermodynamic cycle. Then, these exhaust gases are subsequently used in a second thermodynamic cycle. According to the invention, a WHR cycle arranged downstream of the combustion means N is properly used to turn into mechanical power the enthalpy of this flow, without increasing the backpressure thereof beyond the small extend that is needed to couple the first heat exchanger to the exhaust line.

According to the diagram of figure 2, the addition of a compressor in the intake line of the Diesel engine allows the mean effective pressure (BMEP, Brake Mean Effective Pressure) of the Diesel engine to be increased, at the same time making the PMEP, Pumping Mean Effective Pressure highly positive. By so doing, the efficiency of the Diesel engine is strongly increased.

According to the diagram of figure 3, the addition of a turbine in the exhaust line of the Diesel engine further allows the PMEP of the Diesel engine to become negative, so as to make the exhaust gas recirculation easier according to an EGR diagram.

According to the variant of figure 4, a traditional turbocharged Diesel engine, changed according to the invention, is used.

According to the diagram of figure 5, the addition of an electric motor-generator on the shaft controlling the rotation of the turbine and of the compressor allows the PMEP of the Diesel engine to be controlled in order to balance, based on the operation point and in a suitable manner, the opposing requirements of negative and positive PMEP, so as to favour the efficiency of the engine or the ability to carry out an EGR.

According to any one of the variants described above, the diagram can comprise anyway exhaust gas recirculation means (EGR). They can be high-pressure or low-pressure exhaust gas recirculation means.

As far as the ATS is concerned, thanks to the invention, it is of the type requiring the lambda value to be 1.0, exactly like petrol engines. Therefore, even though the internal combustion engine is a Diesel cycle engine, the ATS is of the type used in petrol engines, a so-called 3-way catalyst, which has a very small cost.

The invention can be applied to any ATS requiring lambda = 1.0, equivalent to a 3-way catalyst.

The fuel injected along the exhaust line is not necessarily Diesel fuel, it can be any kind of fuel.

The supplying maps of the internal combustion engine must preferably be such as to keep the lambda value as low as possible, so as to maintain the temperature of the exhaust gases within a temperature interval that is compatible with the WHR cycle arranged on the exhaust line.

More in particular, when there are further combustion means arranged downstream of the first exchanger of the WHR and a relative turbine arranged immediately downstream of the further combustion means, said turbine can be caused to operate with λ = 1 because the quantity of oxygen contained in the exhaust gases is zero. On the contrary, gas turbines usually operate with excess oxygen, i.e. with lambda >>1.

Gas turbines usually cannot work with lambda = 1, because they would experience gas temperatures that are too high.

Since, according to the invention, three distinct combustions are performed, the first one in the internal combustion engine, the second one downstream thereof and upstream of the WHR and the third one downstream of the WHR, the temperatures reached by the gases turn out to be remarkably lower than in traditional gas turbine configurations because of the following reasons:
- the exhaust gases involved in the third combustion have a high thermal capacity, which helps limit the temperature increase resulting from the third combustion;
- the exhaust gases expand both in the internal combustion engine and, possibly, even downstream thereof, namely before being involved in the third combustion.

The configuration of figures 3, 4 and 5 is particularly advantageous since the exhaust gases immediately downstream of the internal combustion engine have a significant enthalpy content and, therefore, the latter can advantageously be exploited through the first turbine T1 arranged upstream of the combustion means N.

It should be pointed out that the transmission shafts of the different turbines can be operatively associated, for example through gear transmission organs, so as to operate, together, on a vehicle transmission or on a generator defining a turbo-compound diagram, alternatively to a relative compressor or to a dedicated electric generator.

Any one of the diagrams can also be used so that the turbines share a same shaft.

It is evident that the ECU controls the Diesel cycle engine, the generators/electric motors G1 - G4, monitors the other things, the quantity of oxygen in the exhaust gases downstream of the Diesel engine and/or immediately upstream of the ATS, and controls the introduction of fuel into the combustion means N and/or the further combustion means. The elements and features contained in the different preferred embodiments, drawings included, can be combined with one another, without for this reason going beyond the scope of protection of this patent application. The information contained in the part concerning the state of art only serves the purpose of better understanding the invention and does not represent a declaration of existence of the items described. Furthermore, if not specifically excluded by the detailed description, the information contained in the part concerning the state of art should be considered as an integral part of the invention.

## Claims

1. An engine system for vehicles and fixed installations based on Diesel cycle comprising
- a Diesel cycle internal combustion engine (E) comprising an intake line (IP) and an exhaust line (EP) and respective first fuel injection means,
- a heat recovery circuit (WHR) comprising a heat exchanger operatively associated with said exhaust line (EP),
- second means (N) for introducing and burning fuel in said exhaust line arranged downstream of said internal combustion engine and immediately upstream of said heat exchanger,
- a pollutants converting device (ATS) connected on said exhaust line downstream from said heat exchanger to treat the exhaust gases produced by said Diesel cycle engine and by said second means (N),
- processing means (ECU) configured to control a combustion of said second means (N);
**characterized in that** said processing means (ECU) are configured to control an injection/introduction of fuel by means of post-injections of said first injection means or through second injection means, so as to maintain the lambda value, of the exhaust gases entering said pollutants converting device (ATS), equal to 1.0; wherein said pollutants converting device (ATS) is a 3-way catalyst.

2. The system according to claim 1, further comprising a lambda or UEGO sensor installed immediately upstream of the pollutants converting device (ATS), so as to perform a feedback control of the fuel dosage.

3. The system according to claim 1, further comprising a first turbine (T1) arranged upstream of said second means (N) and/or a second turbine arranged downstream of said heat exchanger.

4. The system according to any one of the preceding claims, further comprising a compressor (C1) defining one or more compression stages, arranged on said intake line (IP) and set in rotation by an electric motor (M1, G3), or by a turbine or by an expander of the WHR.

5. The system according to claim 4, wherein said compressor and said second means (N) for introducing and burning fuel in said exhaust line are arranged so as to operate in a coordinated manner.

6. The system according to claim 3, wherein said first and/or second turbine contribute(s) to define a backpressure in said exhaust line (EP); said first and/or second turbine and/or an electric motor (M1, G3) driving in rotation at least one first compressor (C1), defining one or more compression stages, arranged on said intake line (IP); and wherein said first compressor is arranged to provide a predetermined pressure value on the intake line.

7. The system according to any one of the previous claims, wherein said Diesel cycle engine comprises at least one cylinder and a respective piston and a respective intake valve, and wherein said intake valve is controlled so as to be closed during a compression cycle before or after the piston has left a respective bottom dead centre, to achieve a Miller or Atkinson cycle.

8. The system according to claim 3, wherein said first and/or second turbine drive in rotation a respective electric generator (G3).

9. The system according to any one of the preceding claims, further comprising exhaust gases recirculation means (EGR) for high pressure or low pressure or internal EGR.

10. The system according to claim 5 or 6 or 8, further comprising exhaust gases recirculation means (EGR) for high pressure or low pressure or internal EGR and wherein an electric motor/generator (M1, G3) is controlled so as to control the PMEP (Pumping Mean Effective Pressure) of the internal combustion engine to favour a higher efficiency of the internal combustion engine, or a greater ability to achieve said EGR.

## Patentansprüche

1. Kraftmaschinensystem für Fahrzeuge und feste Installationen auf der Grundlage eines Dieselzyklus, das Folgendes umfasst:
- eine Dieselzyklusbrennkraftmaschine (E), die eine Einlassleitung (IP) und eine Abgasleitung (EP) und jeweilige erste Kraftstoffeinspritzmittel umfasst,
- einen Wärmerückgewinnungskreis (WHR), der einen Wärmetauscher umfasst, der der Abgasleitung (EP) funktionstechnisch zugeordnet ist,
- zweite Mittel (N) zum Einbringen und Verbrennen von Kraftstoff in der Abgasleitung, die stromabwärts der Brennkraftmaschine und unmittelbar stromaufwärts des Wärmetauschers angeordnet sind,
- eine Schadstoffumwandlungsvorrichtung (ATS), die mit der Abgasleitung stromabwärts des Wärmetauschers verbunden ist, um die Abgase zu behandeln, die durch die Dieselzykluskraftmaschine und durch die zweiten Mittel (N) erzeugt werden, und
- Verarbeitungsmittel (ECU), die konfiguriert sind, eine Verbrennung der zweiten Mittel (N) zu steuern;
**dadurch gekennzeichnet, dass** die Verarbeitungsmittel (ECU) konfiguriert sind, eine Einspritzung/eine Einbringung von Kraftstoff mittels Nacheinspritzungen der ersten Einspritzmittel oder durch zweite Einspritzmittel zu steuern, um den Lambdawert der Abgase, die in die Schadstoffumwandlungsvorrichtung (ATS) eintreten, bei 1,0 zu halten; wobei die Schadstoffumwandlungsvorrichtung (ATS) ein Dreiwegekatalysator ist.

2. System nach Anspruch 1, das ferner einen Lambda-Sensor oder einen UEGO-Sensor umfasst, der unmittelbar stromaufwärts der Schadstoffumwandlungsvorrichtung (ATS) installiert ist, um eine Rückkopplungssteuerung der Kraftstoffdosierung durchzuführen.

3. System nach Anspruch 1, das ferner eine erste Turbine (T1), die stromaufwärts der zweiten Mittel (N) angeordnet ist, und/oder eine zweite Turbine, die stromabwärts des Wärmetauschers angeordnet ist, umfasst.

4. System nach einem der vorhergehenden Ansprüche, das ferner einen Kompressor (C1) umfasst, der eine oder mehrere Komprimierungsstufen definiert, die an der Einlassleitung (IP) angeordnet sind und durch einen Elektromotor (M1, G3) oder durch eine Turbine oder durch einen Expander des WHR in Drehung versetzt werden.

5. System nach Anspruch 4, wobei der Kompressor und die zweiten Mittel (N) zum Einbringen und Verbrennen von Kraftstoff in der Abgasleitung derart angeordnet sind, dass sie in einer koordinierten Weise arbeiten.

6. System nach Anspruch 3, wobei die erste und/oder die zweite Turbine dazu beitragen, einen Gegendruck in der Abgasleitung (EP) zu definieren; die erste und/oder die zweite Turbine und/oder ein Elektromotor (M1, G3) mindestens einen ersten Kompressor (C1) rotatorisch antreiben, der eine oder mehrere Komprimierungsstufen definiert, die an der Einlassleitung (IP) angeordnet sind; und der erste Kompressor angeordnet ist, um einen vorgegebenen Druckwert in der Einlassleitung bereitzustellen.

7. System nach einem der vorhergehenden Ansprüche, wobei die Dieselzykluskraftmaschine mindestens einen Zylinder und einen entsprechenden Kolben und ein entsprechendes Einlassventil umfasst und das Einlassventil gesteuert wird, während eines Komprimierungszyklus geschlossen zu sein, bevor oder nachdem der Kolben einen entsprechenden unteren Totpunkt verlassen hat, um einen Miller-Zyklus oder einen Atkinson-Zyklus zu erreichen.

8. System nach Anspruch 3, wobei die erste und/oder die zweite Turbine einen jeweiligen elektrischen Generator (G3) rotatorisch antreiben.

9. System nach einem der vorhergehenden Ansprüche, das ferner Abgasrückführungsmittel (AGR) für hohen Druck oder niedrigen Druck oder interne AGR umfasst.

10. System nach Anspruch 5 oder 6 oder 8, das ferner Abgasrückführungsmittel (AGR) für hohen Druck oder niedrigen Druck oder interne AGR umfasst, wobei ein Elektromotor/ elektrischer Generator (M1, G3) gesteuert wird, den PMEP (wirksamen durchschnittlichen Pumpdruck) der Brennkraftmaschine zu steuern, einen höheren Wirkungsgrad der Brennkraftmaschine oder eine größere Fähigkeit, die AGR zu erreichen, zu begünstigen.

## Revendications

1. Système de moteur pour véhicules et installations fixes basé sur un cycle Diesel, comprenant:
- un moteur à combustion interne à cycle Diesel (E) comprenant une ligne d'admission (IP) et une ligne d'échappement (EP) et des premiers moyens d'injection de carburant respectifs,
- un circuit de récupération de chaleur (WHR) comprenant un échangeur de chaleur associé fonctionnellement à ladite ligne d'échappement (EP),
- des deuxièmes moyens (N) d'introduction et de combustion du carburant dans ladite ligne d'échappement agencés en aval dudit moteur à combustion interne et immédiatement en amont dudit échangeur de chaleur,
- un dispositif de conversion des polluants (ATS) connecté sur ladite ligne d'échappement en aval dudit échangeur de chaleur pour traiter les gaz d'échappement produits par ledit moteur à cycle Diesel et par lesdits deuxièmes moyens (N),
- des moyens de traitement (ECU) configurés pour commander une combustion desdits deuxièmes moyens (N);
**caractérisé en ce que** lesdits moyens de traitement (ECU) sont configurés pour commander une injection/introduction de carburant au moyen de post-injections desdits premiers moyens d'injection ou par le biais de deuxièmes moyens d'injection, de manière à maintenir la valeur lambda des gaz d'échappement entrant dans ledit dispositif de conversion des polluants (ATS) égale à 1,0; dans lequel ledit dispositif de conversion des polluants (ATS) est un catalyseur 3 voies.

2. Système selon la revendication 1, comprenant en outre un capteur lambda ou UEGO installé immédiatement en amont du dispositif de conversion des polluants (ATS), de manière à assurer une commande par rétroaction du dosage de carburant.

3. Système selon la revendication 1, comprenant en outre une première turbine (T1) agencée en amont desdits deuxièmes moyens (N) et/ou une deuxième turbine agencée en aval dudit échangeur de chaleur.

4. Système selon l'une quelconque des revendications précédentes, comprenant en outre un compresseur (C1) définissant un ou plusieurs étages de compression, agencé sur ladite ligne d'admission (IP) et entraîné en rotation par un moteur électrique (M1, G3), ou par une turbine ou par un détendeur du WHR.

5. Système selon la revendication 4, dans lequel ledit compresseur et lesdits deuxièmes moyens (N) d'introduction et de combustion du carburant dans ladite ligne d'échappement sont agencés de manière à fonctionner d'une manière coordonnée.

6. Système selon la revendication 3, dans lequel ladite première et/ou deuxième turbine contribuent à définir une contre-pression dans ladite ligne d'échappement (EP); ladite première et/ou deuxième turbine et/ou un moteur électrique (M1, G3) entraînant en rotation au moins un premier compresseur (C1), définissant un ou plusieurs étages de compression, agencé sur ladite ligne d'admission (IP); et dans lequel ledit premier compresseur est agencé pour fournir une valeur de pression prédéterminée sur la ligne d'admission.

7. Système selon l'une quelconque des revendications précédentes, dans lequel ledit moteur à cycle Diesel comprend au moins un cylindre et un piston respectif et une soupape d'admission respective, et dans lequel ladite soupape d'admission est commandée de manière à être fermée pendant un cycle de compression avant ou après que le piston ait quitté un point mort bas respectif, pour obtenir un cycle Miller ou Atkinson.

8. Système selon la revendication 3, dans lequel ladite première et/ou deuxième turbine entraînent en rotation un générateur électrique respectif (G3).

9. Système selon l'une quelconque des revendications précédentes, comprenant en outre des moyens de recirculation des gaz d'échappement (EGR) pour EGR haute pression ou basse pression ou interne.

10. Système selon la revendication 5 ou 6 ou 8, comprenant en outre des moyens de recirculation des gaz d'échappement (EGR) pour EGR haute pression ou basse pression ou interne, et dans lequel un moteur/générateur électrique (M1, G3) est commandé de manière à commander la PMEP (pression moyenne effective de pompage) du moteur à combustion interne pour favoriser un rendement plus élevé du moteur à combustion interne, ou une plus grande aptitude à réaliser ladite EGR.
